# EUROPEAN PATENT APPLICATION

(11) **EP 1 713 021 A1**
(43) Date of publication of application: **18.10.2006**
(21) Application number: 05709430.2
(22) Date of filing: 28.01.2005
(51) Int. Cl.: G06K 19/00, B60C 13/00, B60C 19/00

(54) **RFID-INCORPORATING BAR CODE LABEL, TYRE, AND ITS MANAGEMENT METHOD**

(30) Priority: 30.01.2004 JP 2004023293
(71) Applicant: Kabushiki Kaisha Bridgestone, Chuo-ku, Tokyo 104-8340 (JP)
(72) Inventor: ICHIKAWA, H., c/o K.K. BRIDGESTONE TECH. CTR, Kodaira-shi, Tokyo 187-8531 (JP); HADA, H., c/o K.K. BRIDGESTONE TECH. CTR, Kodaira-shi, Tokyo 187-8531 (JP); KOKUBU, Takao, c/o K.K. BRIDGESTONE TECH. CTR, Kodaira-shi, Tokyo 187-8531 (JP)
(74) Representative: Whalley, Kevin
(86) International application number: PCT/JP2005/001203
(87) International publication number: WO 2005/073903

(57) **Abstract**

An RFID tag-incorporating bar code label having sufficiently high durability even when the label is attached to a tire and capable of reliable communication with a reader. A dipole antenna type RFID tag 14 is interposed and fixed between a first sheet member 11 whose front surface is printed with a bar code 13 and a second sheet member 12 having an adhesive layer formed on the rear surface, thus fabricating an RFID tag-incorporating bar code label 10 having an RFID tag buried in the central portion of a bar code sheet 17. The label 10 is bonded to a tire. Therefore, the position of the RFID tag 14 can be easily specified. Due to the existence of the second sheet member 12, the RFID tag 14 can be spaced apart from a rubber member and a steel product constituting the tire by a predetermined distance.

## Description

### Background of the Invention

### [Field of the Invention]

The present invention relates to a bar code label incorporating an RFID (Radio Frequency-Identification) tag and, specifically, to an RFID-incorporating bar code label used for the management of tires.

### [Description of the Prior Art]

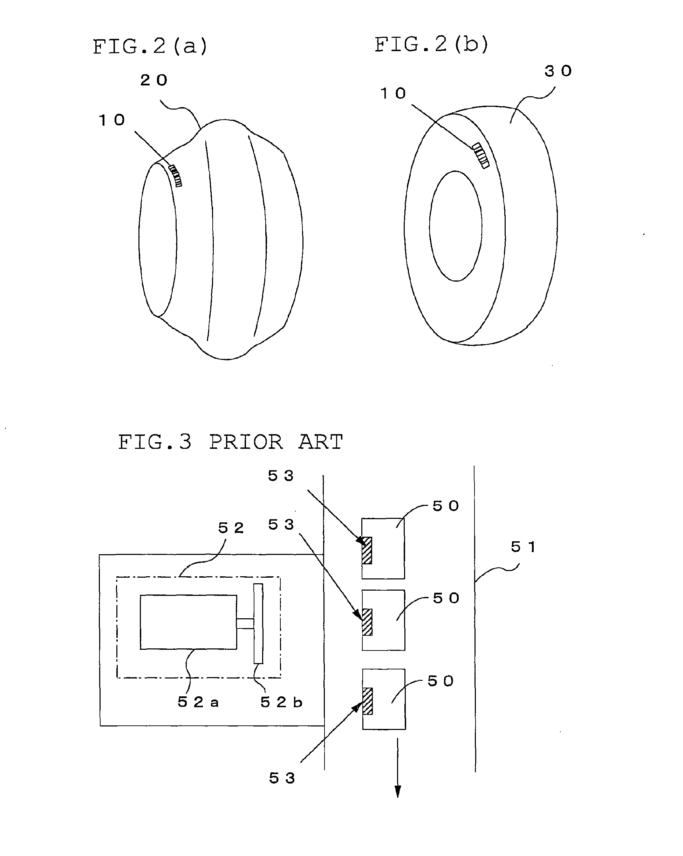

Attaching an RFID tag having tire information such as the name of a company, the name of a product, production serial number, tire structure symbol, sectional width, rim diameter and compression which are currently indicated by irregularities on the side wall of a tire to a tire is now under study. This RFID tag is used in an RFID system installed on a conveyor unit such as a conveyor for moving products. For example, as shown in Fig. 3, a product is identified through communication with a battery-less radio tag (RFID tag) attached to a product 50 by a reader 52a and an antenna 52b provided on the main body 52 of an RFID system installed near the conveyor unit 51 for carrying the product 50. The above RFID tag 53 comprises an antenna and an IC chip having a communication function which is activated by induced electromotive force generated by a weak radio wave received by the antenna and responds to the above reader 52a to transmit information stored in the nonvolatile memory of the above IC chip from the unshown antenna to the above reader 52a (refer to patent document 1, for example).

When there is no reader, there is no means of knowing information on the product and when the RFID tag is broken, information is lost. Therefore, when the indication of the product under control is needed, an indication tag or label is attached to the product. However, when an RFID tag and a label are separate, if the label peels off, a new label must be put on the product and there is the possibility of putting a wrong label. Consequently, there is proposed a label integrated with an RFID tag.

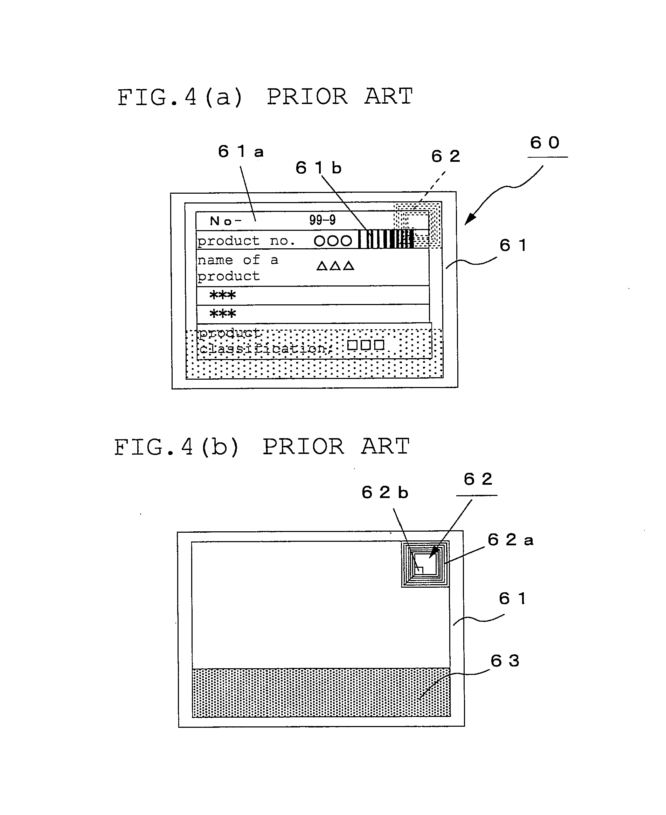

Figs. 4(a) and 4(b) show the constitution of a label 60 with a non-contact IC tag as an example of the above label. Fig. 4(a) is a plan view of the front side and Fig. 4(b) is a plan view of the rear side of the label 60. The above label 60 with a non-contact IC tag has information 61a required for the management and distribution of products such as the name of a product and product classification and a bar code 61b printed on the front surface of a substrate 61 composed of a polyethylene film and a non-contact IC tag 62 mounted on the rear surface of the substrate 61. The above non-contact IC tag 62 comprises an antenna (loop coil antenna) 62a having a coil-like pattern and an IC chip 62b, measures 20 mm x 20 mm and is mounted in the corner of the top portion of the above substrate 62. At this point, an adhesive portion 63 to which a pressure sensitive adhesive has been applied to bond the above label 60 with a non-contact IC tag to an article is formed on the lower portion of the rear side of the above substrate 61. Therefore, only the above adhesive portion 63 comes into contact with the article when the above label 60 is attached to the article made of a material for cutting off a radio wave such as a metal and the above non-contact IC tag 62 is suspended in the air so that it becomes advantageous for communication (refer to patent document 2, for example).
Patent document 1: JP-A 2003-283365
Patent document 2: JP-A 2002-123805

### Summary of the Invention

To attach the RFID tag to the tire, attempts are being made to bury the above RFID tag in rubber in the inside of the tire or attach it to the inner wall of the tire. According to the structure of a tire, the radio communication possible distance of the above RFID becomes very short by the influence of a rubber member or steel product, whereby reading may become unstable. Therefore, the reader must be brought into almost close contact with the RFID tag. To bring the reader into close contact with the RFID tag, the position of the RFID tag must be able to be easily specified. Then it is conceivable that if the bar code label and the RFID tag are integrated with each other and this integrated unit is attached to the tire, the position of the RFID tag can be easily specified.

However, when the label 60 with a non-contact IC tag of the prior art is to be attached to a tire, as the above non-contact IC tag 62 is of a loop coil antenna type, it is too large in size to be attached to the tire and also durability high enough to suspend the non-contact IC tag 62 in the air in the tire which is used in a severe environment is not obtained. It is also conceivable that an adhesive is applied to the entire rear surface of the substrate 61 to bond the whole label 60 to the tire. In this case, the antenna of the non-contact IC tag 62 and the tire are almost in close contact with each other, communication becomes difficult by the influence of a rubber member and a steel product and also sufficiently high durability cannot be ensured only by bonding with an adhesive alone.

It is an object of the present invention which has been made in view of the above problems of the prior art to provide an RFID-incorporating bar code label which can ensure sufficiently high durability and communication with a reader even when it is bonded to a tire.

The inventors of the present invention have conducted intensive studies and have found the following, paying attention to the fact that a dipole antenna type RFID tag using a frequency of 2.45 GHz and the current bar code label attached to a tire are almost the same in size. That is, when a bar code label and an RFID tag are integrated with each other by burying the RFID tag into a sheet made of a material for the current label, the position of the RFID tag can be easily specified and the RFID tag and a rubber member and a steel product constituting the tire can be spaced apart from each other by a predetermined distance. The present invention has been accomplished based on this finding.

In other words, the RFID-incorporating bar code label of the present invention is characterized in that an RFID tag is incorporated in the inside of a bar code sheet having a bar code on the front surface. The RFID tag is interposed between two sheets constituting the bar code sheet. The RFID tag is interposed between the rear surface of a first sheet member and the front surface of a second sheet member both of which are bonded together, a bar code is printed on the front surface of the first sheet member, an adhesive layer is formed on the rear surface of the second sheet member, and release paper is provided on the rear surface of the adhesive layer. The thickness of the second sheet member is 0.25 to 0.35 mm.
The RFID tag is an RFID tag having a dipole antenna.

The tire of the present invention is characterized in that the FRID-incorporating bar code label is bonded to the side face (a section between a tire side portion and a bead portion) of the tire. The RFID tag-incorporating bar code label is bonded by an adhesive having the function of a pressure sensitive adhesive.

The tire management method of the present invention is characterized in that the tire is managed by reading tire information written to the RFID tag of the RFID-incorporating bar code label bonded to the tire.

### Effect of the Invention

According to the present invention, as the RFID tag is incorporated in the inside of a bar code sheet, the position of the RFID tag can be easily specified, reading with a reader becomes easy, and the RFID tag and a rubber member and a steel product constituting the tire can be spaced apart from each other by a predetermined distance, thereby making possible reliable communication. Since the RFID tag is interposed between two sheets constituting the bar code sheet, the RFID tag can be easily incorporated in the inside of the bar code sheet. Since the RFID-incorporating bar code label has an adhesive layer and release paper on the rear surface of the adhesive layer, the bonding force of the adhesive layer can be maintained by the release paper and the RFID-incorporating bar code layer may be bonded to the tire by removing the release paper, thereby making it possible to carry out the work of bonding the RFID-incorporating bar code label to the tire easily and surely. Since the thickness of the second sheet member is 0.25 to 0.35 mm, the influence of the rubber member and the steel product of the tire at the time of communication can be reduced, writing can be carried out accurately, and mechanical stress applied to the RFID tag becomes small as compared with a case where the RFID tag is directly bonded to the tire with the result of improved durability.

When an RFID tag having a bipolar antenna is used as the above RFID tag, the bar code label can be made small in size and a conventional bar code attaching system can be used only by changing the thickness of the label.

When the readable/writable RFID tag-incorporating bar code label is bonded to the side face such as the side portion of the tire, tire information can be obtained without communication with a database, thereby making it possible to manage tire information efficiently.

When the above RFID tag-incorporating bar code label is bonded by an adhesive having the function of a pressure sensitive adhesive, sufficiently high durability can be ensured even in a tire which is used in a severe environment.

### Brief Description of the Drawings

Fig. 1 is a diagram of an RFID tag-incorporating bar code label according to an embodiment of the present invention;
Fig. 2 is a diagram showing the method of bonding the RFID tag-incorporating bar code label;
Fig. 3 is a diagram showing an example of the RFID system of the prior art; and
Fig. 4 is a diagram of a label with a non-contact IC tag of the prior art.

### Detailed Description of the Preferred Embodiment

A preferred embodiment of the present invention will be described hereinunder with reference to the accompanying drawings.

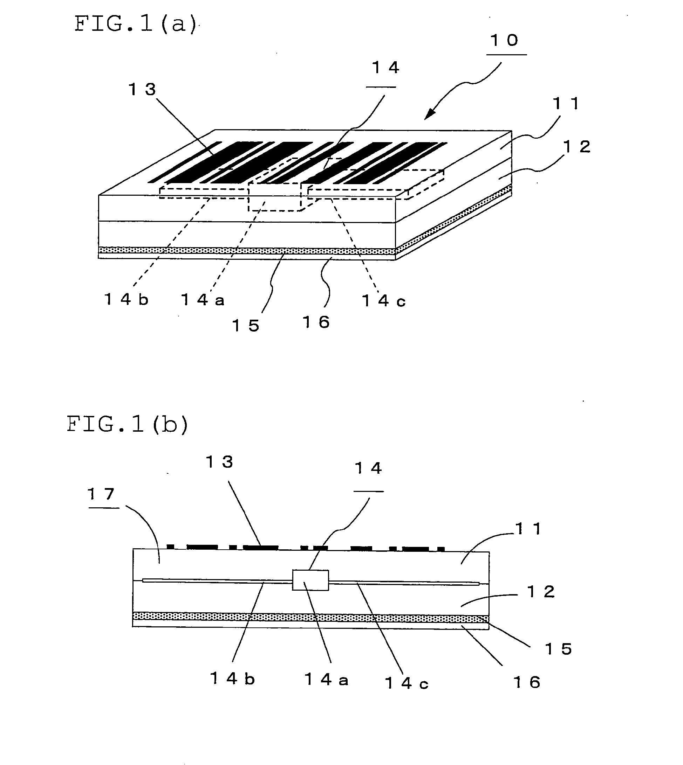

Figs. 1(a) and 1(b) show an RFID tag-incorporating bar code label 10 according to an embodiment of the present invention. In these figures, reference numerals 11 and 12 denote first and second sheet members made of polyethylene terephthalate (PET), 13 a bar code printed on the front surface of the first sheet member 11, and 14 an RFID tag buried between the rear surface of the first sheet member and the front surface of the second sheet member 12. In this embodiment, a dipole antenna type RFID tag having an IC chip 14a and antennas 14b and 14c aligned with the IC chip 14a and extending in opposite directions is used as the above RFID tag 14. Numeral 15 denotes an adhesive layer which is formed on the rear surface of the above second sheet member 12, that is, the mating surface with an unshown tire and made of an adhesive having the function of a pressure sensitive adhesive, and its front surface is covered with release paper 16 before the label 10 is bonded to the tire. That is, the RFID tag-incorporating bar code label 10 has the RFID tag 14 sandwiched between the rear surface of the first sheet member 11 and the front surface of the second sheet member 12 both of which are bonded together, the bar code 13 is printed on the front surface of the first sheet member 11, the adhesive layer 15 is formed on the rear surface of the second sheet member 12, and the release paper 16 is provided on the rear surface of the adhesive layer 15. That is, since the RFID tag-incorporating bar code label 10 has the RFID tag 14 between the two sheet members 11 and 12, the RFID tag 14 can be easily incorporated in the bar code sheet 17, and the manufacture of the RFID tag-incorporating bar code label 10 is easy. As the RFID tag-incorporating bar code label 10 has the adhesive layer 15 and the release paper 16 on the rear surface of the adhesive layer 15, the bonding force of the adhesive layer 15 can be maintained by the release paper 16, and the RFID tag-incorporating bar code label 10 having the exposed adhesive layer 15 may be bonded to the tire 30 by removing the release paper 16, thereby making it possible to carry out the work of bonding the RFID tag-incorporating bar code label 10 to the tire 30 easily and surely.

The length of the above dipole antenna type RFID tag 14 is about 5 cm from radio wave characteristics as the used frequency is 2.45 GHz. The length is slightly shorter than the length of the current bar code label and the width of the RFID tag-incorporating bar code label 10 is shorter than the width (about 6 m) of the bar code label. Therefore, by bonding the above RFID tag 14 between the first sheet member 11 whose front surface is printed with the bar code 13 and the second sheet member 12 having the adhesive layer 15 formed on the rear surface, the above RFID tag 14 can be buried in the bar code sheet 17 consisting of the first and second sheet members 11 and 12. At this point, the above RFID tag 14 is placed at the center, thereby making it possible to prevent the antennas 14b and 14c from contacting the rubber member constituting the tire. Although the length and width of the above RFID tag-incorporating bar code label 10 are the same as those of the current bar code label, the thickness is 0.8mm which is larger than that (0.25 mm) of the prior art. However, with this thickness, the existing bar code attaching system can be used only by changing conditions or by adjusting the operation timing due to the change of the thickness.

To bond the above RFID tag-incorporating bar code label 10 to the tire, after the RFID tag-incorporating bar code label 10 from which the release paper 16 has been removed is put on a green tire 20 as shown in Figs. 2 (a) and 2 (b), the green tire 20 is cured to obtain a product tire 30. At this point, the above label 10 is put on the green tire 20 such that it is positioned on the tire side portion of the product tire 30. Since an adhesive having the function of a pressure sensitive adhesive, specifically an adhesive which functions as a pressure sensitive adhesive for fixing to put the label on the green tire 20 and exhibits a bonding effect only when it is cured (for example, Kemrock of Road Co. Ltd.) is used as the adhesive of the adhesive layer 15 in this embodiment, after curing, the above label 10 is strongly bonded to the product tire 30, thereby making it possible to ensure sufficiently high durability. The above product tire 30 is shipped after it undergoes an inspection step such as uniformity measurement and appearance check. At this point, information on the tire 30 is written to the RFID tag 14 incorporated in the above label 10 with an unshown reader.

Since the above RFID tag 14 is buried in the bar code sheet 17 in this embodiment, when the reader is brought into contact with the top of the bar code 13 at the time of writing, the reader and the above RFID tag 14 can be brought into close contact with each other, whereby communication with the RFID tag 14 can be carried out easily. Since the above RFID tag 14 is spaced apart from the surface of the tire 30 by the thickness (0.25 to 0.35 mm) of the second sheet member 12, the influence of the rubber member and the steel product constituting the tire 30 at the time of communication can be reduced, whereby information can be written accurately and mechanical stress applied to the above RFID tag 14 can be reduced as compared with a case where the RFID tag 15 is directly bonded to the tire with the result of improved durability.

When information is written to the above RFID tag 14 in the steps of molding, curing and inspection, the information written in the previous step is read from the above RFID tag 14 by the reader so that the tire 30 can be managed. Therefore, writing to the RFID tag 14 is preferably carried out in each step. After the above tire 30 is shipped, the user reads out the above information to link it with information on the groove residue, rotation and air pressure of the tire measured separately, thereby making it possible for the user to manage the tire 30.

The management of the tire of the prior art has been carried out by using a series of English letters and numerals represented by irregularities on the tire side wall or the above bar code. As it is difficult to read the series mechanically, it takes a long time to read it. While an inquiry to a database is required in the case of management with the bar code, use of the readable/writable RFID tag 14 makes it possible to acquire tire information quickly without making an inquiry to the database. Further, while the bar code 13 may be stained and difficult to be read after running, use of the RFID tag 14 makes it possible to acquire tire information without reading the bar code 13.

Since the above label 10 is bonded to the tire 20 by the adhesive having the function of a pressure sensitive adhesive in this embodiment, sufficiently high durability can be ensured.

Even when the RFID tag 14 is broken, as the conventional bar code 13 which has been used remains, all of the tire information is not lost.

According to this embodiment, as the dipole antenna type RFID tag 14 is sandwiched and fixed between the first sheet member 11 whose front surface is printed with the bar code 13 and the second sheet member 12 having the adhesive layer 15 formed on the rear surface to manufacture the RFID tag-incorporating bar code label 10 having the RFID tag buried in the center portion of the bar code sheet 17, and this RFID tag-incorporating bar code label 10 is bonded to the tire, the position of the RFID tag 14 can be easily specified. Therefore, reading and writing with the reader become easy, and the RFID tag 14 and the rubber member and the steel product constituting the tire can be spaced part from each other by a predetermined distance due to the existence of the above second sheet member 12, thereby making it possible to carry out reliable communication.

By using the tire having the above RFID tag-incorporating bar code label 10 bonded thereto, tire information can be obtained without communicating with a database, thereby making it possible to manage the tire efficiently.

Since the adhesive layer 15 made of an adhesive having the function of a pressure sensitive adhesive is formed on the rear surface of the above second sheet member 12, sufficiently high durability can be ensured even in a tire which is used in a severe environment.

The first and second sheet members 11 and 12 must be large enough to bury the RFID tag 14 and made of a polyester other than polyethylene terephthalate (PET), specifically film-like material such as polyethylene (PE) or polypropylene (PP). The members are preferably white. If they are not, a white coat may be formed on the front surface of the first sheet member 11 so that a bar code can be printed on the front surface.

The bonding position of the RFID tag-incorporating bar code label 10 is not limited to the tire side portion and may be the space between the first rim line and the second rim line or the bead portion on the rim side.

In the above embodiment, the RFID tag 14 is sandwiched and bonded between the first and second sheet members 11 and 12 to be buried in the bar code sheet 17. The RFID tag 14 may be covered with PET which is then cured by using a plastic/PET molding technology or the like to bury the RFID tag 14 in the bar code sheet. Alternatively, the RFID tag 14 may be inserted into a sheet member having a thin and long hole to be buried in the sheet.

### Industrial Feasibility

Since the position of the RFID tag of the RFID tag-incorporating bar code label of the present invention can be easily specified and communication between the reader and the RFID tag can be carried out without fail, tire information can be managed efficiently without communication with a database. Further, since sufficiently high durability can be ensured even in a tire which is used in a severe environment, the management of the tire in use can be carried out stably.

## Claims

1. An RFID-incorporating bar code label comprising an RFID tag which is incorporated in the inside of a bar code sheet having a bar code on the front surface.

2. The FRID-incorporating bar code label according to claim 1, wherein the RFID tag is interposed between two sheets constituting the bar code sheet.

3. An FRID-incorporating bar code label, wherein the RFID tag is interposed between the rear surface of a first sheet member and the front surface of a second sheet member both of which are bonded together, a bar code is printed on the front surface of the first sheet member, an adhesive layer is formed on the rear surface of the second sheet member, and release paper is provided on the rear surface of the adhesive layer.

4. The FRID-incorporating bar code label according to claim 3, wherein the thickness of the second sheet member is 0.25 to 0.35 mm.

5. The FRID-incorporating bar code label according to any one of claims 1 to 4, wherein the RFID tag is an RFID tag having a dipole antenna.

6. A tire having the FRID-incorporating bar code label of any one of claims 1 to 5 bonded to the side face.

7. The tire according to claim 6, wherein the RFID tag-incorporating bar code label is bonded by an adhesive having the function of a pressure sensitive adhesive.

8. A method of managing a tire by reading tire information written to an RFID tag bonded to the tire of claim 6 or 7.
